# EUROPEAN PATENT APPLICATION

(11) **EP 4 769 655 A1**
(43) Date of publication of application: **01.07.2026**
(21) Application number: 25816039.9
(22) Date of filing: 12.05.2025
(51) Int. Cl.: H01M 10/613, H01M 50/258, H01M 50/559, H01M 10/658, H01M 50/507, H01M 50/224, H01M 10/42, H01M 50/24, H01M 50/213, H01M 50/264

(54) **METHOD FOR MANUFACTURING BATTERY PACK**

(30) Priority: 28.05.2024 KR 20240069337
(71) Applicant: LG Energy Solution, Ltd., Seoul 07335 (KR)
(72) Inventor: YOON, Hyoung-Chul, Daejeon 34122 (KR)
(74) Representative: BCKIP Part mbB
(86) International application number: PCT/KR2025/006406
(87) International publication number: WO 2025/249794

(57) **Abstract**

The present disclosure relates to a method of manufacturing a battery pack comprising a main case, a first case, and a second case, and the method may include a first step of inserting the first case in a sliding manner along a first direction into the main case in which at least a portion of both sides, facing the first direction and a second direction opposite the first direction, is open to couple the first case to the main case, a second step of coupling a BMS assembly to the battery cell assembly so as to be electrically connected to the battery cell assembly, a third step of inserting the battery cell assembly in a sliding manner into the main case along the first direction such that one surface of the battery cell assembly comes into contact with one surface of the first case, and a fourth step of coupling the second case to the main case such that one surface of the battery cell assembly comes into contact with one surface of the second case.

## Description

### TECHNICAL FIELD

The present disclosure relates to a method for manufacturing a battery pack and, more specifically, to a method for manufacturing a battery pack with an improved pack case.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use. In addition, according to recent global trends, as interest in eco-friendly short-distance transportations grows due to minimizing carbon dioxide emissions caused by global warming, the demand for light electric vehicle (LEV) products is rapidly increasing, and the demand for secondary batteries is also increasing according thereto.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or a battery pack may be configured by connecting a plurality of battery cells in series. In addition, a battery module or a battery pack may be configured by connecting a plurality of battery cells in parallel in order to increase the charge/discharge capacity. Accordingly, the number of battery cells included in the battery module or battery pack may be set in various ways depending on the required output voltage or charge/discharge capacity.

Recently, secondary batteries are widely used for not only small devices such as portable electronic devices, but also medium and large devices such as electric bikes, electric vehicles, and household or industrial energy storage systems (ESSs) for driving or energy storage. In particular, when configuring multiple secondary batteries into one battery pack, the multiple secondary batteries may be grouped into several groups such as cell module assemblies and included in the battery pack.

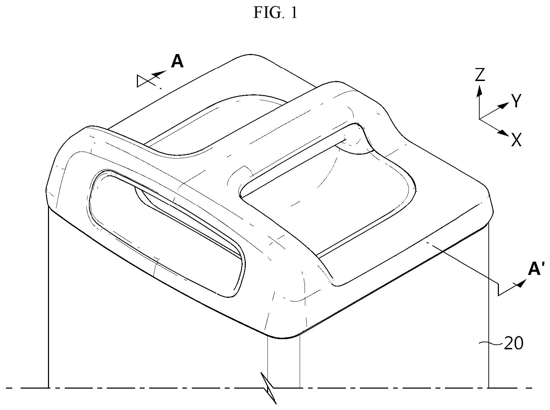

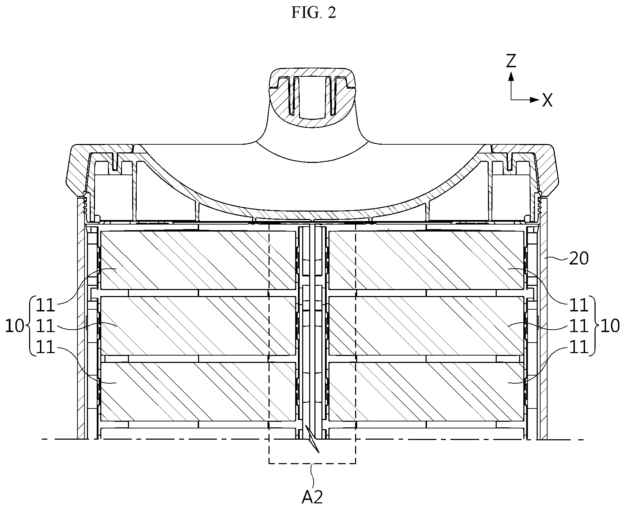

FIG. 1 is a perspective view schematically illustrating a part of the configuration of a conventional battery pack, and FIG. 2 is a cross-sectional view taken along line A1 - A1' in FIG. 1.

Referring to FIGS. 1 and 2, two cell module assemblies 10 are included inside a pack case 20. In addition, each cell module assembly 10 includes a plurality of battery cells 11 such as cylindrical batteries. In this case, each battery cell 11 has a positive electrode terminal (+) and a negative electrode terminal (-) at both ends, and the battery cells 11 may be stacked in the up-down direction (Z-axis direction) while lying horizontally so that the positive electrode terminal and the negative electrode terminal are located at both ends in the horizontal direction (X-axis direction).

In particular, adjacent battery cells 11 in the cell module assembly 10 may be configured such that the positive electrode terminal and the negative electrode terminal are electrically connected in series. In this case, the electrical connection between two battery cells 11 may be implemented by a method such as spot-welding a bus-bar in the form of a metal plate to the positive electrode terminal and/or the negative electrode terminal. However, in this implemented method, for the convenience of electrical connection, as shown in FIG. 2, multiple battery cells 11 may be arranged in one cell module assembly 10 such that the positive electrode terminal and the negative electrode terminal are alternately located. This configuration results in a structure in which the positive electrode terminal and the negative electrode terminal face each other between two cell module assemblies 10, as shown in the part indicated as A2 in FIG. 2.

However, according to the configuration of the conventional battery pack, since the pack case 20 is assembled after electrical connection between two cell module assemblies 10 and connection of a BMS (battery management system), it is impossible to implement a CTP (Cell-To-Pack) type, and since a heat dissipation pad (e.g., thermal interface material (TIM)) is disposed between the cell module assembly 10 and the pack case 20, direct heat conduction does not occur when internal heat moves from the cell module assembly 10 to the pack case 20, so that heat dissipation loss occurs during the heat conduction process and material costs increase.

### DISCLOSURE

### Technical Problem

The present disclosure is designed to solve the problems of the related art, and therefore the present disclosure is directed to providing a battery pack manufacturing method capable of directly transferring heat generated due to charging and discharging of a plurality of battery cell assemblies to a pack case, thereby effectively increasing the cooling efficiency and/or heat transfer efficiency of the battery pack, and a battery pack manufactured by the method.

The present disclosure is also to provide a battery pack manufacturing method in which the components of the battery pack are sequentially stacked in one direction, thereby improving the manufacturing efficiency and facilitating assembly.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including a pack case and a battery cell assembly configured to be stored inside the pack case, wherein at least one surface of the battery cell assembly is configured to be in direct contact with at least one surface of the pack case.

The battery cell assembly may include a first cell assembly including a plurality of first battery cells and a first cell frame storing the plurality of first battery cells, and a second cell assembly stacked adjacent to the first cell assembly and including a plurality of second battery cells and a second cell frame storing the plurality of second battery cells.

The first cell assembly and the second cell assembly may be arranged to be spaced apart from each other, and electrode terminals of the plurality of first battery cells and electrode terminals of the plurality of second battery cells may be configured to face each other.

The battery cell assembly may further include a screen member disposed between the first cell assembly and the second cell assembly.

The electrode terminals of the plurality of first battery cells and the plurality of second battery cells may be disposed in a central portion of the pack case.

The battery pack may further include a first flat bus-bar for connecting the plurality of first battery cells to each other on the electrode terminals of the plurality of first battery cells, a second flat bus-bar for connecting the plurality of second battery cells to each other on the electrode terminals of the plurality of second battery cells, and an inter-bus-bar for connecting the first flat bus-bar and the second flat bus-bar.

The pack case may include a main case configured to have a hollow space in which at least a portion of both sides facing a first direction and a second direction opposite the first direction is open and to surround the battery cell assembly, a first case covering a first opening of the main case facing the first direction, and a second case covering a second opening of the main case facing the second direction.

The first case may cover the first opening on the inner side of the main case, and the second case may cover the second opening on the outer side of the main case.

The size of the first case may be smaller than the size of the second case.

The first case and the second case may be metal plates, respectively, and the plurality of first battery cells may directly transfer heat to the first case, and the plurality of second battery cells may directly transfer heat to the second case.

The main case may further include a plurality of side walls and a side cover wall extending in a vertical direction from one ends of the plurality of side walls to the side in the first direction.

One surface of the first cell assembly may be disposed to be in contact with one surface of the first case, and one surface of the second cell assembly may be disposed to be in contact with one surface of the second case.

The first cell frame may include at least one first hole through which electrode terminals of the plurality of first battery cells are exposed and at least one first receiving hollow through which bottom surfaces of the plurality of first battery cells, which are located opposite the electrode terminals of the plurality of first battery cells, are exposed, and the second cell frame may include at least one second hole through which electrode terminals of the plurality of second battery cells are exposed and at least one second receiving hollow through which bottom surfaces of the plurality of second battery cells, which are located opposite the electrode terminals of the plurality of second battery cells, are exposed.

The battery pack may further include a BMS assembly configured such that one end is in contact with the first cell assembly and the other end is in contact with the second cell assembly.

The wire bonding may be performed between the plurality of first battery cells and between the plurality of second battery cells.

The battery cell assembly may further include a first gasket disposed between the main case and the first case, and a second gasket disposed between the main case and the second case.

The main case and the first case may be configured to be coupled through at least one first fastening member, and the main case and the second case may be configured to be coupled through at least one second fastening member.

The plurality of first battery cells and the plurality of second battery cells may be configured as cylindrical battery cells, and the main case may be configured to surround side surfaces of the cylindrical battery cells.

An adhesive may be further included between the inner surface of the pack case and the battery cell assembly.

In addition, the present disclosure may provide an electric device including a battery pack according to the present disclosure.

The electric device may be an LEV.

In another aspect of the present disclosure, there is provided a method of manufacturing a battery pack including a main case, a first case, and a second case, and the method may include a first step of inserting the first case in a sliding manner along a first direction into the main case in which at least a portion of both sides, facing the first direction and a second direction opposite the first direction, is open to couple the first case to the main case, a second step of coupling a BMS assembly to the battery cell assembly so as to be electrically connected to the battery cell assembly, a third step of inserting the battery cell assembly in a sliding manner into the main case along the first direction such that one surface of the battery cell assembly comes into contact with one surface of the first case, and a fourth step of coupling the second case to the main case such that one surface of the battery cell assembly comes into contact with one surface of the second case.

In the method of manufacturing a battery pack, the battery cell assembly may include a first cell assembly including a plurality of first battery cells and a first cell frame configured to store the plurality of first battery cells, and a second cell assembly stacked adjacent to the first cell assembly and including a plurality of second battery cells and a second cell frame configured to store the plurality of second battery cells.

In the method of manufacturing a battery pack, the first cell assembly and the second cell assembly may be disposed to be spaced apart from each other, and electrode terminals of the plurality of first battery cells and electrode terminals of the plurality of second battery cells may be configured to face each other.

In the method of manufacturing a battery pack, the battery cell assembly may further include a screen member disposed between the first cell assembly and the second cell assembly.

In the method of manufacturing a battery pack, the electrode terminals of the plurality of first battery cells and the plurality of second battery cells may be disposed in a central portion of the pack case.

In the method of manufacturing a battery pack, the main case may include a first opening facing the first direction and a second opening facing the second direction, and may be configured to surround the battery cell assembly. The first case may cover the first opening of the main case, and the second case may cover the second opening of the main case.

In the method of manufacturing a battery pack, the first case may cover the first opening on an inner side of the main case, and the second case may cover the second opening on an outer side of the main case.

In the method of manufacturing a battery pack, a size of the first case may be smaller than a size of the second case.

In the method of manufacturing a battery pack, the first case and the second case may be configured as a metal plate, respectively, and the plurality of first battery cells may be configured to directly transfer heat to the first case, and the plurality of second battery cells may be configured to directly transfer heat to the second case.

In the method of manufacturing a battery pack, the main case may further include a plurality of side walls and a side cover wall extending in a vertical direction from one ends of the plurality of side walls on a side facing the first direction.

In the method of manufacturing a battery pack, one surface of the first cell assembly may be disposed to be in contact with one surface of the first case, and one surface of the second cell assembly may be disposed to be in contact with one surface of the second case.

In the method of manufacturing a battery pack, the first cell frame may include at least one first hole through which electrode terminals of the plurality of first battery cells are exposed and at least one first receiving hollow through which bottom surfaces of the plurality of first battery cells, which are located opposite the electrode terminals of the plurality of first battery cells, are exposed, and the second cell frame may include at least one second hole through which electrode terminals of the plurality of second battery cells are exposed and at least one second receiving hollow through which bottom surfaces of the plurality of second battery cells, which are located opposite the electrode terminals of the plurality of second battery cells, are exposed.

In the method of manufacturing a battery pack, the battery pack may further include a BMS assembly disposed such that one end is in contact with the first cell assembly and the other end is in contact with the second cell assembly.

In the method of manufacturing a battery pack, wire bonding is performed between the plurality of first battery cells and between the plurality of second battery cells.

In the method of manufacturing a battery pack, the battery cell assembly may further include a first gasket disposed between the main case and the first case, and a second gasket disposed between the main case and the second case.

In the method of manufacturing a battery pack, the main case and the first case may be configured to be coupled through at least one first fastening member, and the main case and the second case may be configured to be coupled through at least one second fastening member.

In the method of manufacturing a battery pack, the plurality of first battery cells and the plurality of second battery cells may be configured as cylindrical battery cells, and the main case may be configured to surround the side surfaces of the cylindrical battery cells.

The method of manufacturing a battery pack may further include providing an adhesive between the inner surface of the pack case and the battery cell assembly.

### Advantageous Effects

According to an embodiment of the present disclosure, heat generated due to charging and discharging of multiple battery cell assemblies can be directly transferred to the pack case, thereby effectively increasing the cooling efficiency and/or heat transfer efficiency of the battery pack.

According to another aspect of the present disclosure, a heat dissipation pad configured to be disposed between multiple battery cell assemblies and the pack case in an existing battery pack can be omitted, thereby reducing material costs and simplifying the manufacturing process.

According to another aspect of the present disclosure, manufacturing efficiency can be improved and assembly can be facilitated by sequentially stacking components of the battery pack in one direction.

According to another aspect of the present disclosure, even in a battery cell assembly structure in which multiple battery cell assemblies are stacked in two layers, the battery cell assembly can be directly fixed to the pack case, enabling implementation of a CTP type.

According to another aspect of the present disclosure, it is possible to improve the safety of rapid charging and the efficiency of energy use by providing a battery pack with high heat transfer efficiency and improved manufacturing efficiency, and an electric device including the same.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating a partial configuration of a conventional battery pack.
FIG. 2 is a cross-sectional view taken along line A1 - A1' in FIG. 1.
FIG. 3 is a perspective view illustrating a battery pack according to an embodiment of the present disclosure.
FIG. 4 is an exploded perspective view of a battery pack according to an embodiment of the present disclosure.
FIG. 5 is a perspective view of a battery pack according to an embodiment of the present disclosure viewed from a first direction.
FIG. 6 is an exploded perspective view of a pack case according to an embodiment of the present disclosure.
FIG. 7 is a front view illustrating an assembled pack case according to an embodiment of the present disclosure viewed from a first direction.
FIG. 8 is a front view illustrating an assembled pack case according to an embodiment of the present disclosure viewed from a second direction.
FIG. 9 is a perspective view illustrating a battery cell assembly and a BMS (battery management system) assembly, which are coupled to each other, according to an embodiment of the present disclosure.
FIG. 10 is an exploded perspective view illustrating the configuration of a first cell assembly according to an embodiment of the present disclosure.
FIG. 11 is an exploded perspective view illustrating the configuration of a second cell assembly according to an embodiment of the present disclosure.
FIG. 12 is a cross-sectional view of a battery pack taken along the Y-axis according to an embodiment of the present disclosure.
FIG. 13 is a drawing illustrating an electric device including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

The sizes of some elements shown in the attached drawings may be exaggerated, instead of reflecting their actual sizes, for convenience of explanation and clarification. In addition, the same reference numerals may indicate the same elements among the embodiments.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate that the element may be disposed in contact with the upper surface (or lower surface) of the target element, and that another element may be interposed between the target element and the element disposed at the top (or bottom) of the target element.

Additionally, the expression "an element is 'connected,' 'coupled,' or 'fastened' to another element" should be understood that the two elements may be directly connected or coupled to each other, and that another element may be "interposed" between the two elements, or that the two elements may be "connected," "coupled," or "fastened" through another element.

Unless stated otherwise, a single element used herein should be construed to encompass a plurality of elements. In this specification, the expression "an element 'is configured as' or 'includes' other elements or steps" should be understood that the element may exclude some other elements or steps and that the element may further include additional elements or steps.

Throughout the specification, "A and/or B", unless otherwise stated, may denote A or B, or A and B.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a front-back direction, the Y-axis direction may indicate the left-right direction perpendicular to the X-axis direction on the horizontal plane (X-Y plane), and the Z-axis direction may indicate an up-down direction (vertical direction) perpendicular to both the X-axis direction and the Y-axis direction.

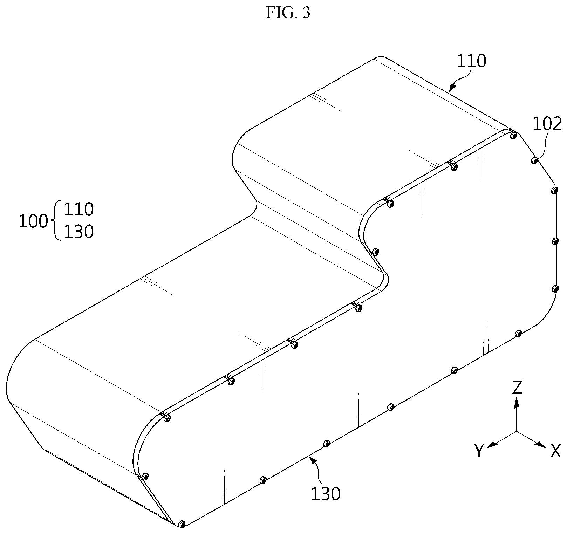

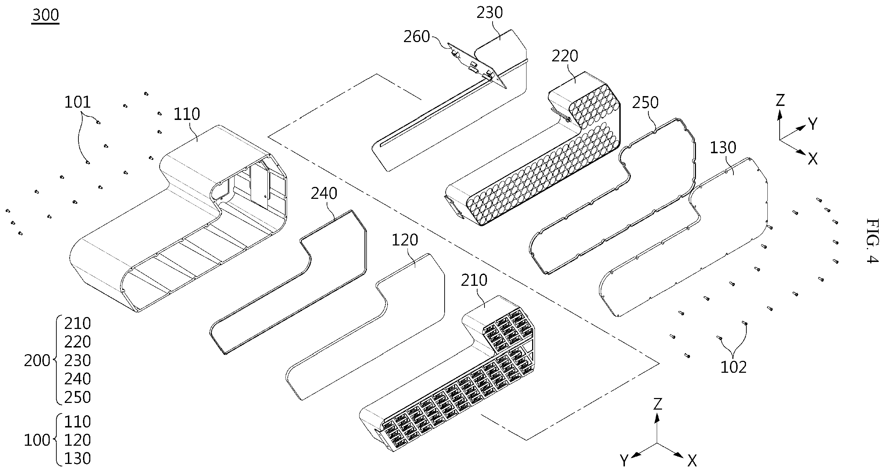

FIG. 3 is a perspective view illustrating a battery pack 300 according to an embodiment of the present disclosure. FIG. 4 is an exploded perspective view of a battery pack 300 according to an embodiment of the present disclosure.

Referring to FIG. 3 and FIG. 4, a battery pack 300 according to an embodiment of the present disclosure may include a pack case 100, a battery cell assembly 200, and a BMS (battery management system) assembly 260.

According to an embodiment, at least one side of the battery cell assembly 200 may be configured to come into direct contact with at least one side of the pack case 100. Here, the term "direct contact" may include not only the case where the battery cell assembly 200 and the pack case 100 are disposed without any member interposed therebetween, but also the case where an intermediate member, such as an adhesive, that does not hinder direct heat conduction between the battery cell assembly 200 and the pack case 100 is disposed therebetween. That is, "direct contact" may include a state in which the bottom surface of the battery cell assembly 200 is in contact with the pack case 100 without an adhesive, or a state in which it is attached thereto using an adhesive or the like. For example, "direct contact" may indicate a state in which the battery cell assembly 200 and the pack case 100 are in close thermal contact with each other without a material thicker than an adhesive, such as a heat dissipation pad, a material costing more, or a material requiring additional manufacturing processes. According to an embodiment, the battery cell assembly 200 may be directly attached to the pack case 100, so that internal heat generated from the battery cell assembly 200 may be directly transferred to the pack case 100. That is, heat may be effectively dissipated by arranging at least one surface of the battery cell assembly 200 to be in contact with at least one surface of the pack case 100. The arrangement and/or structure of the battery cell assembly 200 and the pack case 100 will be described in detail below.

According to an embodiment, the pack case 100 may be configured as a plurality of cases coupled and/or assembled to store the battery cell assembly 200 in the inner space. According to an embodiment, the pack case 100 may include a main case 110, a first case 120, and a second case 130.

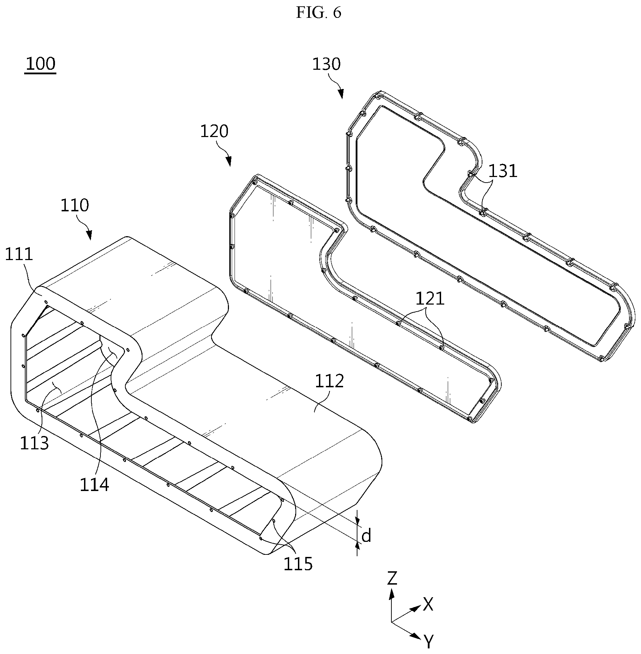

According to an embodiment, the main case 110 may be configured to surround sides of the battery cell assembly 200. According to an embodiment, the main case 110 may be configured to have a hollow space in which at least a portion of both sides facing a first direction (-X direction) and a second direction (+X direction) opposite the first direction is open. For example, the main case 110 may include a first opening (e.g., the first opening 113 in FIG. 6) facing a first direction and a second opening (e.g., the second opening 114 in FIG. 6) facing a second direction. The main case 110 may be configured to insert the battery cell assembly 200 and/or the BMS assembly 260 into the main case 110 in a sliding manner through the second opening 114. According to an embodiment, the main case 110 is preferably made of a material having high mechanical rigidity and excellent heat dissipation properties so as to protect the battery cell assembly 200 and/or the BMS assembly 260 from external impact. For example, the main case 110 may be made of a metal material. For weight reduction, the main case 110 may be made of a metal material such as aluminum (AL). For rigidity, the main case 110 may also be made of steel.

According to an embodiment, the first case 120 may be disposed to cover the first opening 113 of the main case 110 facing the first direction. For example, the shape of the first case 120 may be substantially the same as the shape of the first opening 113 of the main case 110. The first case 120 is preferable made of a material having high mechanical rigidity and excellent heat dissipation so as to protect the battery cell assembly 200 and/or the BMS assembly 260 from external impact. For example, the first case 120 may be made of a metal material, like the main case 110. The first case 120 made of a metal material may implement a heat sink function. Therefore, passive cooling may be performed by the first case 120 itself, which is an external case, without a separate heat sink.

According to an embodiment, the second case 130 may be disposed to cover the second opening 114 of the main case 110 facing the second direction. For example, the shape of the second case 130 may be substantially the same as the shape of the second opening 114 of the main case 110. The second case 130 is preferably made of a material having high mechanical rigidity and excellent heat dissipation so as to protect the battery cell assembly 200 and/or the BMS assembly 260 from external impact. For example, the second case 130 may be made of a metal material, like the main case 110 and the first case 120. The second case 130 made of a metal material may implement a heat sink function, like the first case 120 made of a metal material, and passive cooling may be performed by the second case 130 itself, which is an external case, without a separate heat sink. However, the shape and structure of the pack case 100 including the main case 110, the first case 120, and the second case 130 are not limited to the above embodiment, and may be designed and changed into various embodiments capable of storing the battery cell assembly 200. According to another embodiment, the main case 110 and the first case 120 may be formed integrally. In this case, the assembly process between the main case 110 and the first case 120 may be omitted, and since there is no first opening 113, there is no sealing problem.

According to an embodiment, the battery cell assembly 200 may include a first cell assembly 210, a second cell assembly 220, a screen member 230, a first gasket 240 gasket, and a second gasket 250.

According to an embodiment, the battery cell assembly 200 may be configured such that two or more cell assemblies are stacked to increase the capacity and output of the battery. The battery cell assembly 200 may include a first cell assembly 210 and a second cell assembly 220 stacked adjacent to the first cell assembly 210. For example, the first cell assembly 210 and the second cell assembly 220 may be stacked in the front-back direction (X-axis direction). According to an embodiment, the first cell assembly 210 and the second cell assembly 220 may be sequentially stacked. For example, the shapes and/or sizes of the first cell assembly 210 and the second cell assembly 220 may be substantially the same as the shape and/or size of one side of the pack case 100 facing the X-axis direction. For example, the shapes and/or sizes of the first cell assembly 210 and the second cell assembly 220 may be substantially the same.

According to an embodiment, the two cell assemblies may include a plurality of battery cells 211 and 221 obtained by connecting m battery cells in series and/or n battery cells in parallel in the form of nPmS (n and m are natural numbers), and cell frames 212 and 222 that store the plurality of battery cells. According to an embodiment, the cell frames of two cell assemblies may be coupled to each other, and then be stored, as one body, in the pack case 100. That is, the two cell assemblies may be mechanically and electrically connected to each other, and may then be inserted into the main case 110 in a sliding manner or a forced-fit manner so as to be stored in the pack case 100.

According to an embodiment, the screen member 230 may be disposed between the first cell assembly 210 and the second cell assembly 220. For example, the screen member 230 may be disposed to be in contact with at least one surface of each of the first cell assembly 210 and the second cell assembly 220. The screen member 230 may be configured for heat dissipation and/or insulation so as to block flame or heat between the first cell assembly 210 and the second cell assembly 220 and electrically insulate them. For example, the screen member 230 may include mica and/or glass fiber (GF). For example, the shape and/or size of the screen member 230 may be substantially the same as the shape and/or size of one side of the pack case 100 facing the X-axis direction.

According to an embodiment, a gasket having a high compression ratio, a gap filler, etc. may be applied between the cases configured to be coupled to each other. According to an embodiment, the first gasket 240 may be disposed between the main case 110 and the first case 120 to fill the gap between the main case 110 and the first case 120. The first gasket 240 may be disposed at a position corresponding to a position where the main case 110 and the first case 120 are coupled. The first gasket 240 may be configured in the shape of a closed curve including an opening. The first gasket 240 may provide waterproofing and sealing.

Similarly, the second gasket 250 may be disposed between the main case 110 and the second case 130 to fill the gap between the main case 110 and the second case 130. The second gasket 250 may be disposed at a position corresponding to a position where the main case 110 and the second case 130 are coupled. The second gasket 250 may be configured in the shape of a closed curve including an opening. The second gasket 250 may also provide sealing.

According to an embodiment, the pack case 100 may further include a BMS assembly 260 electrically connected to the battery cell assembly 200. The BMS assembly 260 may be provided between the pack case 100 and the battery cell assembly 200 so as to be detachably connected to the pack case 100 and the battery cell assembly 200.

According to an embodiment, the battery pack 300 may have a predetermined length in the X-axis direction, a predetermined width in the Y-axis direction, and a predetermined height in the Z-axis direction, and may have a polygonal shape when viewed from the X-axis direction. In the case where the battery pack 300 is mounted to a vehicle such as an EV or HEV, the mounting space is limited due to vehicle components installed at a high degree of integration, so the battery pack 300 is preferably configured as a cuboid structure with a large height relative to its length and a large front-rear length relative to the height so that it may be mounted in a narrow space such as between the driver's seat and the passenger seat. The battery pack 300 may also be configured as a tunnel-type structure. The appearance of the battery pack 300 may vary depending on the pack case 100. In addition, the battery pack 300 may be mounted to LEVs such as electric bicycles, electric scooters, electric ATVs/UTVs, electric lawn mowers, automatic forklifts, delivery robots, and automated guided vehicles (AGVs), and may have the appearance as illustrated in FIG. 1. However, the shape and/or size of the battery pack 300 is not limited to the above-described embodiment, and may be designed and changed in various ways according to the specifications of the product to which it is applied.

According to an embodiment, referring to FIG. 4, the battery pack 300 according to the present disclosure may be configured such that the first case 120, the battery cell assembly 200, and the second case 130 are sequentially stacked in the inner space of the main case 110. Specifically, the battery pack 300 according to the present disclosure may be configured such that the first case 120, the first gasket 240, the first cell assembly 210, the screen member 230, the second cell assembly 220, the second gasket 250, and the second case 130 are sequentially stacked in the inner space of the main case 110. As described above, the battery pack 300 according to the present disclosure may enable the components of the battery pack 300 to be stacked in one direction, thereby improving manufacturing efficiency and facilitating assembly. The manufacturing method of the battery pack 300 according to the present disclosure will be described in detail below.

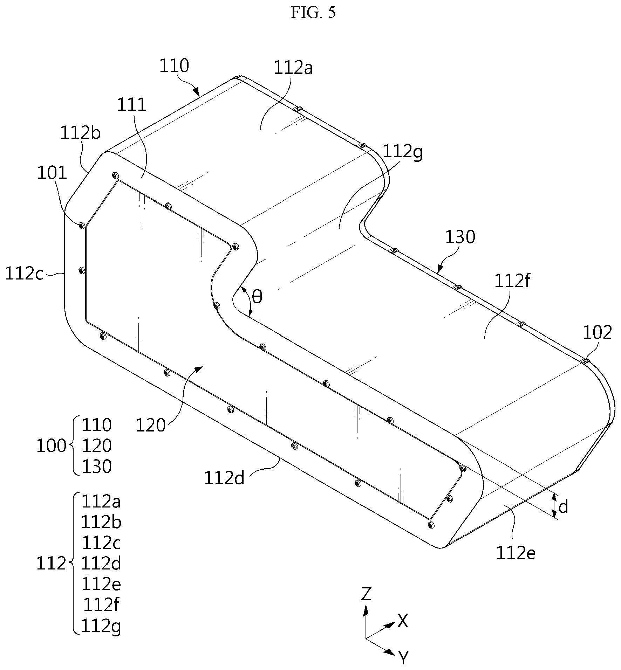

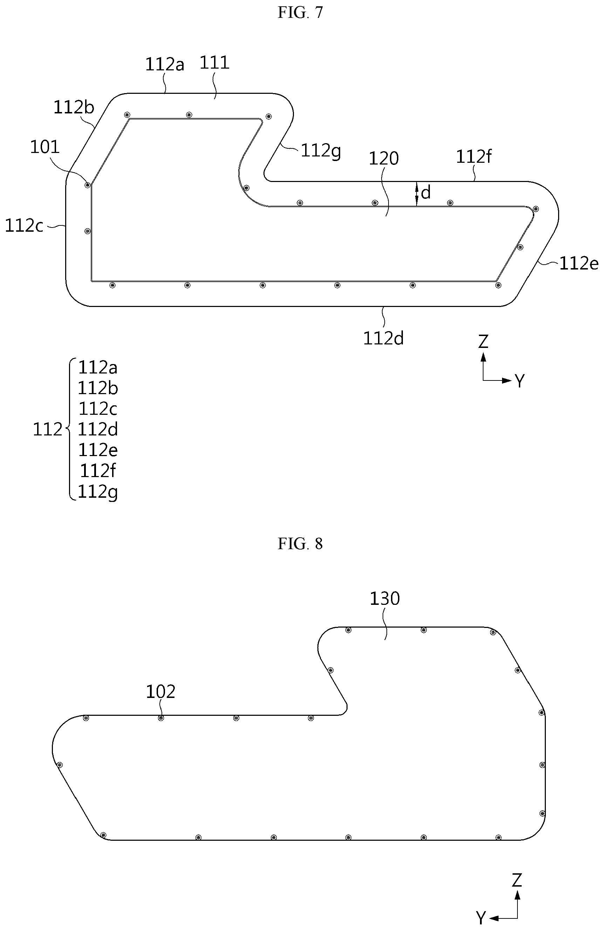

FIG. 5 is a perspective view of a battery pack 300 according to an embodiment of the present disclosure viewed from a first direction. FIG. 6 is an exploded perspective view of a pack case 100 according to an embodiment of the present disclosure. FIG. 7 is a front view illustrating an assembled pack case 100 according to an embodiment of the present disclosure viewed from a first direction. FIG. 8 is a front view illustrating an assembled pack case 100 according to an embodiment of the present disclosure viewed from a second direction.

Referring to FIGS. 5 to 8, a battery pack 300 according to an embodiment of the present disclosure may include a pack case 100, a battery cell assembly 200, and a BMS assembly 260. The configurations of the pack case 100, the battery cell assembly 200, and the BMS assembly 260 in FIGS. 5 to 8 may be entirely or partially the same as the configurations of the pack case 100, the battery cell assembly 200, and the BMS assembly 260 in FIGS. 3 and 4. The embodiments in FIGS. 5 to 8 may be partially combined with the embodiments in FIGS. 3 and 4.

According to an embodiment, the pack case 100 may be configured to store a battery cell assembly 200 in the inner space by coupling and/or assembling the main case 110, the first case 120, and the second case 130. According to an embodiment, the main case 110 may have a hollow space in which at least a portion of both sides facing a first direction and a second direction opposite the first direction is open. According to an embodiment, the main case 110 may include a first opening 113 facing the first direction and a second opening 114 facing the second direction. For example, the size of the first opening 113 and the size of the second opening 114 may be different from each other. For example, the size of the first opening 113 may be smaller than the size of the second opening 114. The main case 110 may be configured to insert the battery cell assembly 200 and/or the BMS assembly 260 into the main case 110 in a sliding manner through the second opening 114.

According to an embodiment, the main case 110 may have a polygonal shape when viewed from the X-axis direction. For example, the main case 110 may have a polygonal shape with one concave portion when viewed from the X-axis direction. The shape and/or size of the main case 110 may correspond to the shape and/or size of the battery pack 300, and one side of the components constituting the battery pack 300 facing the X-axis direction may have a shape substantially corresponding thereto.

According to an embodiment, referring to FIG. 5, the main case 110 may include a plurality of side walls 112 facing in a direction perpendicular to the first direction. For example, the plurality of side walls 112 of the main case 110 may include a first side wall 112a, a second side wall 112b inclined at a specified angle with the first side wall 112a, a third side wall 112c inclined at a specified angle with the second side wall 112b, a fourth side wall 112d inclined at a specified angle with the third side wall 112c and substantially parallel to the first side wall 112a, a fifth side wall 112e inclined at a specified angle with the fourth side wall 112d, a sixth side wall 112f inclined at a specified angle with the fifth side wall 112e and parallel to the first side wall 112a, and a seventh side wall 112g inclined at a specified angle with the sixth side wall 112f and in contact with the first side wall 112a. For example, the outer surface of the sixth side wall 112f may be formed to be inclined at a first angle (θ) with respect to the outer surface of the seventh side wall 112g. For example, the first angle (θ) may be an acute angle between 0 degrees to 90 degrees. For example, the main case may have a polygonal shape in which the portion where the sixth side wall 112f and the seventh side wall 112g meet is concave when viewed from the X-axis direction. Hereinafter, the portion where the sixth side wall 112f and the seventh side wall 112g meet will be defined as a "concave portion". Such a "concave portion" may indicate not only the main case 110 but also all corresponding parts of the components that constitute the battery pack 300.

According to an embodiment, the main case 110 may further include a side cover wall 111 that extends vertically from one ends of the plurality of side walls 112 on the side facing the first direction. The side cover wall 111 may extend inward from one ends of the plurality of side walls 112 on the side facing the first direction. The side cover wall 111 may be disposed to face the first direction. The side cover wall 111 may extend vertically from one ends of the plurality of side walls 112 to a first length d. The side cover wall 111 may have, for example, the shape of a closed curve to have a first opening 113 formed therein and a thickness of a first length d. According to an embodiment, the first case 120 may be configured to be coupled to the side cover wall 111.

According to an embodiment, the first case 120 may cover the first opening 113 from the inner side of the main case 110. For example, the first case 120 may be assembled to cover the first opening 113 of the main case 110 in a sliding manner through the inner space of the main case 110. For example, the first case 120 may be inserted into the main case 110 in a sliding manner along the first direction and coupled to the main case 110. For example, the shape and/or size of the first case 120 may substantially correspond to the shape and/or size of the first opening 113.

According to an embodiment, the second case 130 may cover the second opening 114 from the outer side of the main case 110. For example, the second case 130 may be assembled to cover the second opening 114 from the outer side of the second opening 114 after the assembly of the first case 120 and the battery cell assembly 200. For example, the first case 120 may be inserted into the second opening 114 of the main case 110 along the first direction and coupled to the main case 110. For example, the shape and/or size of the second case 130 may substantially correspond to the shape and/or size of the second opening 114.

According to an embodiment, the size of the first case 120 and the size of the second case 130 may be different. According to an embodiment, the size of the first case 120 may be smaller than the size of the second case 130. For example, the size of the first case 120 may be smaller than the size of the second case 130 by approximately the first length d, which is the thickness of the side cover wall 111. Since the first case 120 covers the first opening 113 from the inner side of the main case 110 and since the second case 130 covers the second opening 114 from the outer side of the main case 110, the first case 120 that must be slidably coupled inside the main case 110 may be relatively small in size. As described above, according to an embodiment of the present disclosure, since the sizes of the first case 120 and the second case 130 are different from each other, the components of the battery pack 300 may be stacked in one direction (e.g., in the X-axis direction). According to an embodiment of the present disclosure, the pack case 100, the battery cell assembly 200, and the BMS assembly 260 constituting the battery pack 300 may be stacked in one direction, thereby improving manufacturing efficiency and providing a battery pack 300 that is easy to assemble. This structure may also be advantageous for fixing and/or assembling the first gasket 240 and the second gasket 250.

According to an embodiment, the first case 120 and the second case 130 may be coupled and/or fixed to the main case 110. For example, the first case 120 and the second case 130 may be bolted to the main case 110 or may be coupled to each other by a male-female coupling structure (not shown).

According to an embodiment, the main case 110 and the first case 120 may be coupled to each other through at least one first fastening member 101, and the main case 110 and the second case 130 may be coupled to each other through at least one second fastening member 102. According to an embodiment, at least one first fastening member 101 may be disposed at regular intervals along the edge of the first case 120. For example, at least one first fastening member 101 may include a plurality of fastening members spaced apart from each other along the edge of the first case 120. Similarly, at least one second fastening member 102 may be disposed at regular intervals along the edge of the second case 130. For example, at least one second fastening member 102 may include a plurality of fastening members spaced apart from each other along the edge of the second case 130. The first fastening member 101 and the second fastening member 102 may be, for example, bolts.

According to an embodiment, the main case 110 may include at least one first fastening hole 115 formed on one side facing the first direction. For example, at least one first fastening hole 115 may be formed on the side cover wall 111 of the main case 110. The first case 120 may include at least one first through-hole 121 formed on the edge to allow at least one first fastening member 101 to pass therethrough. For example, at least one first fastening member 101 may be inserted into the main case 110 and the first case 120 along the second direction. For example, at least one first fastening member 101 may pass through at least one first through-hole 121 of the first case 120 and then be inserted into at least one first fastening hole 115 of the main case 110. According to an embodiment, the number, positions, and/or sizes of the at least one first fastening member 101, the at least one first fastening hole 115, and the at least one first through-hole 121 may correspond to each other.

According to an embodiment, the main case 110 may include at least one second fastening hole 116 formed on one side facing the second direction. For example, at least one second fastening hole 116 may be formed on the edge of the plurality of side walls 112 of the main case 110. The second case 130 may include at least one second through-hole 131 formed on the edge to allow at least one second fastening member 102 to pass therethrough. For example, at least one second fastening member 102 may be inserted into the main case 110 and the third case 130 along the first direction. For example, at least one second fastening member 102 may pass through at least one second through-hole 131 of the second case 130 and then be inserted into at least one second fastening hole 116 of the main case 110. According to an embodiment, the number, positions, and/or sizes of the at least one second fastening member 102, the at least one second fastening hole 116, and the at least one second through-hole 131 may correspond to each other.

For example, at least one first fastening hole 115, at least one second fastening hole 116, at least one first through-hole 121, and/or at least one second through-hole 131 may be openings formed in the X-axis direction or holes formed in one direction (e.g., inward direction).

However, the method of coupling and/or fixing the first case 120 and the second case 130 to the main case 110 is not limited to the above embodiment, and may be configured in various ways. In addition, the method of coupling and/or fixing the first case 120 to the main case 110 and the method of coupling and/or fixing the second case 130 to the main case 110 may be substantially the same or different from each other.

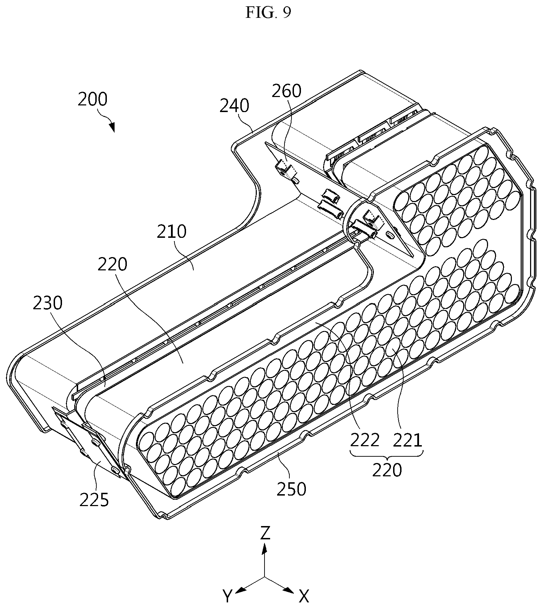

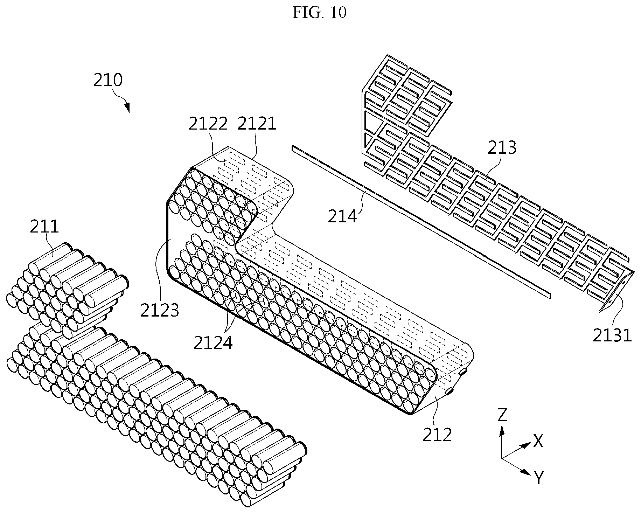

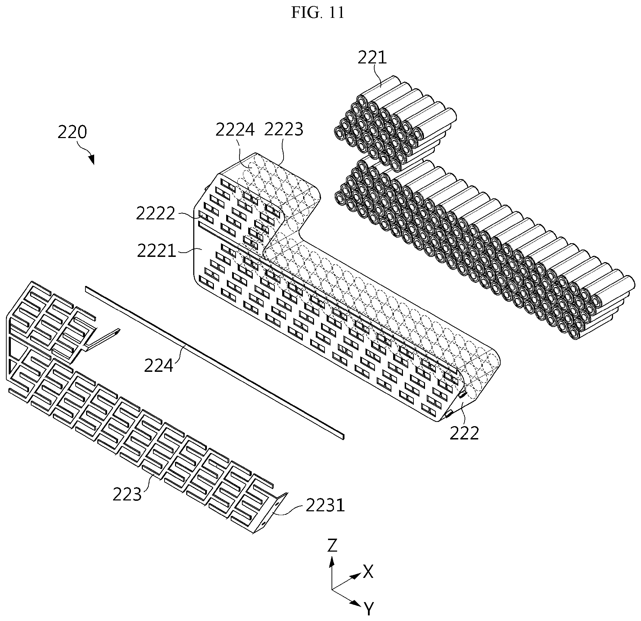

FIG. 9 is a perspective view illustrating a battery cell assembly 200 and a BMS assembly 260, which are coupled to each other, according to an embodiment of the present disclosure. FIG. 10 is an exploded perspective view illustrating the configuration of a first cell assembly 210 according to an embodiment of the present disclosure. FIG. 11 is an exploded perspective view illustrating the configuration of a second cell assembly 220 according to an embodiment of the present disclosure.

Referring to FIGS. 9 to 11, a battery pack 300 according to an embodiment of the present disclosure may include a pack case 100, a battery cell assembly 200, and a BMS assembly 260. The configurations of the pack case 100, the battery cell assembly 200, and the BMS assembly 260 in FIGS. 9 to 11 may be entirely or partially the same as the configurations of the pack case 100, the battery cell assembly 200, and the BMS assembly 260 in FIGS. 5 to 8. The embodiments in FIGS. 9 to 11 may be partially combined with the embodiments in FIGS. 5 to 8.

According to an embodiment, the battery cell assembly 200 may be configured such that the first gasket 240, the first cell assembly 210, the screen member 230, the second cell assembly 220, and the second gasket 250 are sequentially stacked from the first direction to the second direction. As described above, the battery cell assembly 200 according to the present disclosure may enable the stacking of components in one direction and may be sequentially disposed in the pack case 100, thereby improving the manufacturing efficiency and facilitating the assembly.

In addition, even in a structure including a battery cell assembly 200 in which a plurality of cell assemblies are stacked in two layers, the battery cell assembly 200 may be directly fixed to the pack case 100, so that the CTP type can be implemented.

According to an embodiment, the first cell assembly 210 may include a plurality of first battery cells 211, a first cell frame 212 storing the plurality of first battery cells 211, a first flat bus-bar 213, and a first sensing unit 214. Similarly, the second cell assembly 220 may include a plurality of second battery cells 221, a second cell frame 222 storing the plurality of second battery cells 221, a second flat bus-bar 223, and a second sensing unit 224. The configuration and structure of the second cell assembly 220 are substantially the same as those of the first cell assembly 210, so a description of the second cell assembly 220 will be omitted below.

According to an embodiment, the plurality of first battery cells 211 may be configured as cylindrical battery cells. The plurality of first battery cells 211 may be aligned at regular intervals. The plurality of first battery cells 211 may be obtained by connecting m battery cells in series and/or n battery cells in parallel in the form of nPmS (n and m are natural numbers). For example, the plurality of first battery cells 211 may be disposed to correspond to the shape of the main case 110. For example, to conform to a polygonal shape with a concave portion, the plurality of first battery cells 211 may include battery cells aligned to extend in the up-down direction (Y-axis direction) in the lower portion (in the -Z-axis direction), and battery cells aligned to be located only in the left (-Y-axis direction) upper (+Z-axis direction) portion, corresponding to the shape of the battery pack 300.

According to an embodiment, the cylindrical battery cells constituting the plurality of first battery cells 211 may be stacked while lying so that the first electrode terminal (e.g., the positive electrode terminal (+)) or the second electrode terminal (e.g., the negative electrode terminal (-)) is positioned at both ends facing the first direction or the second direction. Each cylindrical battery cell may be obtained by placing an electrolyte and an electrode assembly into a cylindrical battery can through an opening of the battery can and sealing the opening of the battery can. The cylindrical battery cell may have an electrode assembly obtained by winding a positive electrode plate and a negative electrode plate with a separator interposed therebetween into a jellyroll type, and the positive electrode plate may be electrically connected to the first electrode terminal, and the negative electrode plate may be electrically connected to the second electrode terminal. For example, the first electrode terminal may be a rivet penetrating the opposite surface of the opening of the battery can, and the opening of the battery can may be finished with beading and crimping using a cap plate. In this case, the battery can may function as a second electrode terminal. Here, the battery can may be coated with an insulating film or an insulating material on the remaining portion, excluding a specific portion that functions as an electrode terminal.

In particular, the upper surface of the battery can around the first electrode terminal may be used as the second electrode terminal. Then, the plurality of first battery cells 211 may have a structure in which both the first electrode terminal having a first polarity and the second electrode terminal electrically insulated from the first electrode terminal and having a second polarity are provided on one side in the longitudinal direction (parallel to the X-axis). That is, since a pair of electrode terminals are positioned in the same direction, it is possible to dispose electrical connection parts such as a bus-bar only on one side of the plurality of first battery cells 211 in the case of electrically connecting the plurality of first battery cells 211. This may result in simplification of the structure of the battery pack 300 and improvement of energy density.

For example, the plurality of first battery cells 211 may be configured as battery cells in the form of 4680. Here, 4680 represents a form factor. In the form factor, the first two digits represent the diameter of the secondary battery, and the remaining digits represent the height of the secondary battery. The 4680 cell has high efficiency and a large size, compared to the existing 18650 cell or 21700 cell. A battery pack 300 including such a battery cell may be implemented to have an optimal layout for LEVs according to the present disclosure.

According to an embodiment, the plurality of first battery cells 211 may be wire-bonded or connected to each other with a bus-bar. Here, wire bonding may indicate ultrasonically pressing both ends of a metal wire to a bonding target. However, other bonding technologies, such as laser welding, may be applied to wire bonding, in addition to ultrasonic waves. According to another embodiment, the plurality of first battery cells 211 may be coupled to each other by resistance welding. However, the coupling method of the plurality of battery cells is not limited to the above embodiment and may be variously designed and changed.

According to an embodiment, the first cell frame 212 may be disposed to surround the side surfaces of the plurality of first battery cells 211. According to an embodiment, the first cell frame 212 may include a first surface 2121 including at least one first hole 2122 and a second surface 2123 including at least one first receiving hollow 2124 and facing in the opposite direction of the first surface 2121. According to an embodiment, the second cell frame 222 may include a third surface 2221 including at least one second hole 2222 and a fourth surface 2223 including at least one second receiving hollow 2224 and facing in the opposite direction of the third face 2221.

According to an embodiment, at least one first hole 2122 of the first cell frame 212 and at least one second hole 2222 of the second cell frame 222 may be disposed to come into contact with each other at a central portion of the battery pack 300. For example, the first surface 2121 of the first cell frame 212 including at least one first hole 2122 and the third surface 2221 of the second cell frame 222 including at least one second hole 2222 may be disposed at a central portion of the battery pack 300 in the X-axis direction. For example, the second surface 2123 of the first cell frame 212 including at least one first receiving hollow 2124 and the fourth surface 2223 of the second cell frame 222 including at least one second receiving hollow 2224 may be disposed on the edge of the battery pack 300 in the X-axis direction.

According to an embodiment, at least one first receiving hollow 2124 may be configured such that bottom surfaces of the plurality of first battery cells 211, which are located opposite the first electrode terminals of the plurality of first battery cells 211, are exposed. According to an embodiment, at least one first receiving hollow 2124 may be disposed to respectively receive the battery cells constituting the plurality of first battery cells 211 at a predetermined interval. For example, the size and shape of at least one first receiving hollow 2124 may be substantially the same as the sizes and shapes of the plurality of first battery cells 211. According to an embodiment, the first electrode terminals of the plurality of first battery cells 211 may be exposed through at least one first hole 2122. According to an embodiment, at least one first hole 2122 and at least a portion of at least one first receiving hollow 2124 may correspond to each other. However, at least one first hole 2122 and at least one first receiving hollow 2124 may be substantially different from each other in the size and/or shape.

According to an embodiment, the first flat bus-bar 213 may be disposed on one surface of the first cell frame 212. According to an embodiment, the first flat bus-bar 213 may be disposed on the first surface 2121 of the first cell frame 212. For example, the first flat bus-bar 213 may be detachably coupled to the first surface 2121 of the first cell frame 212. The first flat bus-bar 213 may be disposed on the first electrode terminals of the plurality of first battery cells 211 so as to electrically connect the plurality of first battery cells 211 to each other. Such bus-bar connection may reduce the space in the X-axis direction used for electrical connection, and may reduce the dead space, which is advantageous for increasing energy density. For example, the first electrode terminals of the plurality of first battery cells 211 may be attached to the surface of the first flat bus-bar 213. That is, the first electrode terminals of the plurality of first battery cells 211 may be electrically connected to each other by welding the ends of the corresponding first flat bus-bar 213. One end of the first flat bus-bar 213 may be connected to a printed circuit board (not shown). The printed circuit board (not shown) may sense the voltage characteristics of the plurality of first battery cells 211 through the first flat bus-bar 213 and transmit voltage information to the BMS assembly 260 connected through a cable connector.

According to an embodiment, the first sensing unit 214 may sense the voltage information of the plurality of first battery cells 211. The first sensing unit 214 may be electrically connected to the plurality of first battery cells 211 and may be disposed on one surface of the first cell frame 212. For example, the first sensing unit 214 may be disposed on the first surface 2121 including at least one first hole 2122 of the first cell frame 212. The first sensing unit 214 may be disposed adjacent to the first flat bus-bar 213 and electrically connected to the first flat bus-bar 213 by wire bonding.

According to an embodiment, the first flat bus-bar 213 may further include a first extension portion 2131 that extends and protrudes in the X-axis direction. Similarly, the second flat bus-bar 223 may further include a second extension portion 2231 that extends and protrudes in the X-axis direction. According to an embodiment, the battery cell assembly 200 may further include an inter bus-bar 225 connecting the first extension portion 2131 of the first flat bus-bar 213 and the second extension portion 2231 of the second flat bus-bar 223. The first flat bus-bar 213 and the second flat bus-bar 223 may be electrically connected through the inter bus-bar 225. For example, the inter bus-bar 225 may be coupled to the first cell frame 212 and the second cell frame 222.

According to an embodiment, the first gasket 240 may be disposed between the first cell assembly 210 and the first case 120. The first gasket 240 may be disposed at a position corresponding to a position where the side cover wall 111 of the main case 110 and the first case 120 are coupled. The size and shape of the first gasket 240 may substantially correspond to the shape of the first opening 113 of the main case 110 or the size and shape of the first case 120. According to an embodiment, the size of the first gasket 240 may be smaller than the size of the second gasket 250. According to an embodiment, the first gasket 240 may further include at least one fastening hole (not shown) through which at least one first fastening member 101 may pass.

According to an embodiment, the second gasket 250 may be disposed between the second cell assembly 220 and the second case 130. The second gasket 250 may be disposed at a position corresponding to a position where the main case 110 and the second case 130 are coupled. The size and shape of the second gasket 250 may substantially correspond to the shape of the second opening 114 of the main case 110 or the size and shape of the second case 130. According to an embodiment, the size of the second gasket 250 may be larger than the size of the first gasket 240. According to an embodiment, the second gasket 250 may further include at least one fastening hole (not shown) through which at least one second fastening member 102 may pass.

According to an embodiment, the BMS assembly 260 may be coupled to a portion of the battery cell assembly 200. For example, one end of the BMS assembly 260 may come into contact with the first cell assembly 210 and the other end may come into contact with the second cell assembly 220. For example, the BMS assembly 260 may be coupled to a concave portion (e.g., a portion corresponding to the portion where the sixth side wall 112f and the seventh side wall 112g meet in FIG. 5) of the battery cell assembly 200. However, the coupling position and/or arrangement of the BMS assembly 260 is not limited to the above embodiment, and when coupled to a portion of the battery cell assembly 200, the coupling position may be set in various ways.

According to an embodiment, the BMS assembly 260 may be configured as a BMS circuit board (not shown) on which a BMS chip and a current sensor, etc. are mounted and a BMS housing (not shown) that supports the BMS circuit board, and the BMS housing may be detachably assembled with the battery cell assembly 200, so that the BMS assembly 260 may be integrally fixed to the battery cell assembly 200. The BMS assembly 260 may be assembled to be electrically and structurally connected to the first cell assembly 210 and the second cell assembly 220 while being fixed to the battery cell assembly 200. The BMS circuit board of the BMS assembly 260 and the battery cells of the battery cell assembly 200 may be electrically connected to each other by parts such as a bus-bar, a cable, and a connector, which is obvious to those skilled in the art, so a detailed description thereof will be omitted.

In the battery cell assembly 200, the electrical connection of the plurality of first battery cells 211 in the first cell assembly 210 is performed on the upper surface of the first cell assembly 210, and the electrical connection of the plurality of second battery cells 221 in the second cell assembly 220 is performed on the upper surface of the second cell assembly 210, and these electrical connection portions may be a central portion of the battery cell assembly 200. The electrical connection using a bus-bar may reduce dead space, and the connection may be performed by laser welding or spot-welding using resistance welding, thereby simplifying the connection configuration. In addition, battery cells corresponding to the amount of the reduced dead space may be further stored in the pack case 100. Alternatively, the size of the pack case 100 may be reduced by the amount of the reduced dead space. That is, the cell capacity and electric capacity per unit volume may be relatively excellent. Accordingly, the energy density of the battery pack 300 may be improved compared to the conventional one.

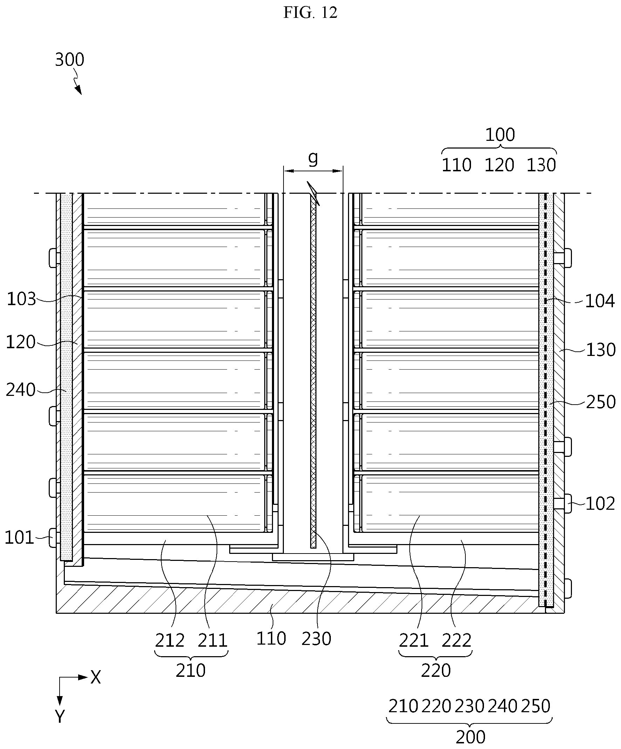

FIG. 12 is a cross-sectional view of a battery pack taken along the Y-axis direction according to an embodiment of the present disclosure.

Referring to FIG. 12, a battery pack 300 according to an embodiment of the present disclosure may include a pack case 100, a battery cell assembly 200, and a BMS assembly 260. The configurations of the pack case 100, the battery cell assembly 200, and the BMS assembly 260 in FIG. 12 may be entirely or partially the same as the configurations of the pack case 100, the battery cell assembly 200, and the BMS assembly 260 in FIGS. 9 to 11. The embodiment in FIG. 12 may be partially combined with the embodiments in FIGS. 9 to 11.

According to an embodiment, at least one surface of the battery cell assembly 200 may be configured to be in direct contact with at least one surface of the pack case 100. Specifically, according to an embodiment, one surface of the first cell assembly 210 may be disposed to be in contact with one surface of the first case 120, and one surface of the second cell assembly 220 may be disposed to be in contact with one surface of the second case 130. The bottom surfaces of the plurality of first battery cells 211 are exposed through at least one first hole 2122 of the first cell frame 212, and the bottom surfaces of the plurality of second battery cells 221 are exposed through at least one second hole 2222 of the second cell frame 222. Therefore, the plurality of first battery cells 211 may directly transfer heat to the first case 120 through each of the exposed bottom surfaces, and the plurality of second battery cells 221 may directly transfer heat to the second case 130 through each of the exposed bottom surfaces. According to the present disclosure, the battery cell assembly 200 may be directly attached to the pack case 100, so that internal heat generated in the battery cell assembly 200 may be directly transferred to the pack case 100. That is, heat dissipation may be effectively performed by arranging at least one surface of the battery cell assembly 200 to be in direct contact with at least one surface of the pack case 100. In addition, since the first case 120 and the second case 130 are configured as metal plates, heat dissipation may be more effectively performed when the plurality of first battery cells 211 directly transfer heat to the first case 120 and the plurality of second battery cells 221 directly transfer heat to the second case 130.

That is, high-temperature heat generated from the plurality of first battery cells 211 and/or the plurality of second battery cells 221 may be discharged to the outside through the first case 120 and/or the second case 130 connected to the bottom surfaces. In this case, the plurality of first battery cells 211 and/or the plurality of second battery cells 221, and the first case 120 and/or the second case 130 may be in complete contact with each other without any empty space between them. Accordingly, the high temperature of the plurality of first battery cells 211 and/or the plurality of second battery cells 221 may be cooled to the outside through the first case 120 and/or the second case 130 in a natural cooling (passive cooling) manner. Small battery packs may be difficult to provide an active cooling structure due to space constraints or product cost issue. Therefore, the passive cooling manner in the present disclosure may be efficient for the battery pack.

According to an embodiment, at least one surface of the battery cell assembly 200 may be fixed to at least one surface of the pack case 100 using an adhesive. For example, the battery pack 300 may further include a first adhesive 103 disposed between the first case 120 and the first cell assembly 210, and a second adhesive 104 disposed between the second case 130 and the second cell assembly 220. The first adhesive 103 and the second adhesive 104 are very thin and thus facilitate heat transfer, so heat loss through the adhesive may not be substantially considered.

According to an embodiment, a separate heat dissipation pad (e.g., thermal interface material (TIM)) between the battery cell assembly 200 and the pack case 100 may be excluded. Since the heat dissipation pad is omitted, there is no heat dissipation loss, thereby reducing material costs and simplifying the manufacturing process.

According to an embodiment, the first cell assembly 210 and the second cell assembly 220 may be spaced apart from each other. For example, the first cell assembly 210 and the second cell assembly 220 may be disposed to be spaced a specified distance (g) apart from each other. For example, the specified distance (g) may be defined as a minimum safe distance. Here, the minimum safe distance may indicate a minimum distance between the first cell assembly 210 and the second cell assembly 220 that prevents chain ignition between adjacent battery cells when one of them explodes, which is obtained through an experiment in which a battery cell is overcharged and exploded. For example, the specified distance (g) needs to be designed to be approximately 5 mm or more. However, the minimum safe distance is not limited to the above embodiment, and may vary depending on the type, capacity, specifications, etc. of the battery cell included in the battery pack 300.

According to an embodiment, the screen member 230 may be disposed between the first cell assembly 210 and the second cell assembly 220. The screen member 230, the first cell assembly 210, and the second cell assembly 220 may be disposed to be spaced specified distances or more apart from each other. This is intended to reflect, when a flame is emitted from one battery cell, the flame on the screen member 230, thereby preventing the flame from spreading to another battery cell in the same cell assembly.

According to an embodiment, at least one surface of the screen member 230 may be configured to be in contact with at least a portion of the main case 110. At least one surface of the screen member 230 may be fixed to at least a portion of the main case 110. For example, the main case 110 may further include a recess, a hook, and/or a protrusion for fixing the screen member 230. However, the method of fixing the position of the screen member 230 is not limited to the above embodiment and may be variously designed and changed.

According to the present embodiment, electrical connection is performed on the side of the first electrode terminal located on the upper side of a plurality of battery cells 211 and 221, and the electrical connection is simplified to improve the energy density of the entire battery pack 300, and the bottom surfaces of the battery cells 211 and 221 are in direct contact with the pack case 100, thereby naturally cooling the heat of the battery cells 211 and 221 to the outside, so that it may be easily applied to a small battery pack. Such a small battery pack may be used for LEVs.

Hereinafter, a method for manufacturing a battery pack 300 according to an embodiment of the present disclosure will be described.

According to an embodiment, a method for manufacturing a battery pack 300 may include a first step of inserting a first case 120 into the main case 110 along the first direction in a sliding manner to couple the first case 120 to the main case 110, a second step of coupling a BMS assembly 260 to a battery cell assembly 200, a third step of inserting the battery cell assembly 200 into the main case 110 along the first direction in a sliding manner, and a fourth step of coupling the second case 130 to the main case 110.

According to an embodiment, in the second step, the battery cell assembly 200 may be configured such that the first gasket 240, the first cell assembly 210, the screen member 230, the second cell assembly 220, and the second gasket 250 are sequentially stacked from the first direction to the second direction. As described above, the battery cell assembly 200 according to the present disclosure may be configured such that components are stacked in one direction, and may be sequentially disposed in the pack case 100.

According to an embodiment, in the third step, one surface of the first cell assembly 210 and one surface of the first case 120 may be disposed to be in direct contact with each other. According to an embodiment, in the fourth step, one surface of the second cell assembly 220 and one surface of the second case 130 may be disposed to be in direct contact with each other.

In the battery pack 300 according to the present disclosure, components of the battery pack 300 may be stacked in one direction from the first direction to the second direction, thereby improving manufacturing efficiency and facilitating assembly.

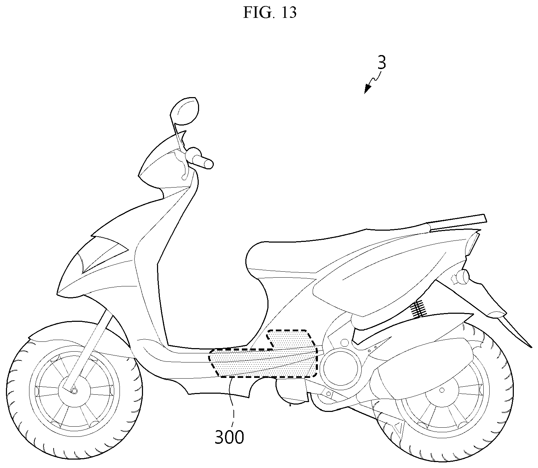

FIG. 13 is a drawing illustrating an electric device including a battery pack 300 according to an embodiment of the present disclosure.

Referring to FIG. 13, an electric device 3 according to an embodiment of the present disclosure may include a battery pack 300 according to an embodiment of the present disclosure. The electric device may operate by receiving power from the battery pack 300 according to an embodiment of the present disclosure.

Preferably, the electric device 3 may be an LEV. LEVs may include an E-bike, an E-scooter, an electric golf cart, and the like. Since these LEVs are outdoor driving vehicles, the battery pack 300 must have good waterproof properties to prevent external liquid (e.g., rainwater) from flowing into the battery pack 300. Therefore, a waterproof grade of IP67 is a basic requirement for these LEVs. The battery pack 300 of the present disclosure may satisfy this waterproof requirement by the pack case 100 structure and the first and second gaskets 240 and 250.

In addition, the LEVs must ensure the safety of users riding the LEVs. The battery pack 300 is configured such that the first cell assembly 210 and the second cell assembly 220 are spaced a specified distance (g) apart from each other, so that when one of the facing battery cells explodes, the battery cell located on the opposite side does not cause chain ignition.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A method of manufacturing a battery pack comprising a main case, a first case, and a second case, the method comprising:
a first step of inserting the first case in a sliding manner along a first direction into the main case in which at least a portion of both sides, facing the first direction and a second direction opposite the first direction, is open to couple the first case to the main case;
a second step of coupling a BMS assembly to the battery cell assembly so as to be electrically connected to the battery cell assembly;
a third step of inserting the battery cell assembly in a sliding manner into the main case along the first direction such that one surface of the battery cell assembly comes into contact with one surface of the first case; and
a fourth step of coupling the second case to the main case such that one surface of the battery cell assembly comes into contact with one surface of the second case.

2. The method of claim 1,
wherein the battery cell assembly comprises:
a first cell assembly comprising a plurality of first battery cells and a first cell frame configured to store the plurality of first battery cells; and
a second cell assembly stacked adjacent to the first cell assembly and comprising a plurality of second battery cells and a second cell frame configured to store the plurality of second battery cells.

3. The method of claim 2,
wherein the first cell assembly and the second cell assembly are disposed to be spaced apart from each other, and
wherein electrode terminals of the plurality of first battery cells and electrode terminals of the plurality of second battery cells are configured to face each other.

4. The method of claim 2,
wherein the battery cell assembly
further comprises a screen member disposed between the first cell assembly and the second cell assembly.

5. The method of claim 2,
wherein the electrode terminals of the plurality of first battery cells and the plurality of second battery cells are disposed in a central portion of the pack case.

6. The method of claim 2,
wherein the main case comprises a first opening facing the first direction and a second opening facing the second direction, and is configured to surround the battery cell assembly,
wherein the first case is configured to cover the first opening of the main case, and
wherein the second case is configured to cover the second opening of the main case.

7. The method of claim 6,
wherein the first case is configured to cover the first opening on an inner side of the main case, and the second case is configured to cover the second opening on an outer side of the main case.

8. The method of claim 6,
wherein a size of the first case is smaller than a size of the second case.

9. The method of claim 6,
wherein the first case and the second case are configured as a metal plate, respectively,
wherein the plurality of first battery cells are configured to directly transfer heat to the first case, and
wherein the plurality of second battery cells are configured to directly transfer heat to the second case.

10. The method of claim 1,
wherein the main case further comprises a plurality of side walls and a side cover wall extending in a vertical direction from one ends of the plurality of side walls on a side facing the first direction.

11. The method of claim 2,
wherein one surface of the first cell assembly is disposed to be in contact with one surface of the first case, and
wherein one surface of the second cell assembly is disposed to be in contact with one surface of the second case.

12. The method of claim 2,
wherein the first cell frame comprises at least one first hole through which electrode terminals of the plurality of first battery cells are exposed and at least one first receiving hollow through which bottom surfaces of the plurality of first battery cells, which are located opposite the electrode terminals of the plurality of first battery cells, are exposed, and
wherein the second cell frame comprises at least one second hole through which electrode terminals of the plurality of second battery cells are exposed and at least one second receiving hollow through which bottom surfaces of the plurality of second battery cells, which are located opposite the electrode terminals of the plurality of second battery cells, are exposed.

13. The method of claim 2,
wherein the battery pack further comprises a BMS assembly disposed such that one end is in contact with the first cell assembly and the other end is in contact with the second cell assembly.

14. The method of claim 2,
wherein wire bonding is performed between the plurality of first battery cells and between the plurality of second battery cells.

15. The method of claim 1,
wherein the battery cell assembly further comprises:
a first gasket disposed between the main case and the first case; and
a second gasket disposed between the main case and the second case.

16. The method of claim 1,
wherein the main case and the first case are configured to be coupled through at least one first fastening member, and
wherein the main case and the second case are configured to be coupled through at least one second fastening member.

17. The method of claim 2,
wherein the plurality of first battery cells and the plurality of second battery cells are configured as cylindrical battery cells, and
wherein the main case is configured to surround the side surfaces of the cylindrical battery cells.

18. The method of claim 1,
further comprising providing an adhesive between the inner surface of the pack case and the battery cell assembly.
